# EUROPÄISCHE PATENTSCHRIFT

(11) **EP 0 786 769 B1**
(45) Veröffentlichungstag und Bekanntmachung des Hinweises auf die Patenterteilung: **30.10.2002**
(21) Anmeldenummer: 97200157.2
(22) Anmeldetag: 20.01.1997
(51) Int. Cl.: G11B 15/44

(54) **Reversebandlaufwerk mit einer Umschaltvorrichtung**
Reverse tape drive with a switching device
Dispositif d'entraînement de bande réversible avec un dispositif de commutation

(30) Priorität: 26.01.1996 DE 19602741
(43) Veröffentlichungstag der Anmeldung: 30.07.1997
(73) Patentinhaber: Philips Corporate Intellectual Property GmbH, 20099 Hamburg (DE); Koninklijke Philips Electronics N.V., 5621 BA Eindhoven (NL)
(72) Erfinder: Kunze, Norbert, Röntgenstrasse 24, 22335 Hamburg (DE); Koch, Stefan, Röntgenstrasse 24, 22335 Hamburg (DE)
(74) Vertreter: von Laue, Hanns-Ulrich, Dipl.-Ing.

(56) Entgegenhaltungen:
- EP-A- 0 290 079
- EP-A- 0 467 371
- DE-A- 4 230 128
- PATENT ABSTRACTS OF JAPAN vol. 010, no. 157 (P-464), 6.Juni 1986 & JP 61 009858 A (TERADA DENKI SEISAKUSHO KK), 17.Januar 1986,

## Beschreibung

Die Erfindung betrifft eine Umschaltvorrichtung für ein Reverselaufwerk für ein Magnetbandkassettengerät mit einem zwischen einem ersten und einem zweiten Wickelrad in einem Schwenkbereich schwenkbaren Getriebe, mittels dessen in einer ersten Betriebsposition der Umschaltvorrichtung für eine erste Bandlaufrichtung das erste Wickelrad und in einer zweiten Betriebsposition der Umschaltvorrichtung für eine zweite Bandlaufrichtung das zweite Wickelrad antreibbar ist, wobei beim Schwenkvorgang zwischen den zwei Betriebspositionen das Getriebe auf einen bewegbar gelagerten Stellhebel einwirkt und wobei ein Schwenkhebel vorgesehen ist, an dem ein Schwenkrad angeordnet ist, und wobei der Schwenkhebel mit einem mit dem Schwenkrad kämmenden Zwischenrad, insbesondere mittels einer Reibkupplung, gekoppelt ist,

Eine derartige Vorrichtung ist aus dem Kassettenlaufwerk SCA der Firma Philips sowie der EP 290079 bekannt. Bei dieser bekannten Vorrichtung trägt ein Schwenkhebel, welcher um die Achse eines Zwischenrades schwenkbar gelagert ist, ein Schwenkrad, welches bei der Schwenkbewegung in eine fest an der Chassisplatte des Laufwerkes befestigte Verzahnung einschwenkt und während des Eingriffs des Schwenkrades mit der am Chassis befestigten Verzahnung mit großer Kraft Umschaltvorgänge im Laufwerk vornehmen kann. Dazu ist der Schwenkhebel mit einem Stellhebel gekoppelt, welcher auf einen Stellschieber einwirkt, der die Druckrollenumschaltung für beide Wiedergabeeinrichtungen vornimmt. Der Schwenkbereich des Schwenkhebels ist dabei so ausgelegt, daß die Verzahnung des Schwenkrades im Wiedergabebetrieb mit den Wickelrädern, welche die Spulen in der Kassette aufwickeln, in Eingriff bringbar sind und in einem Bereitschaftsbetrieb (Stand-By) nicht in Eingriff bringbar sind. Im Stand-By Betrieb darf das Schwenkrad aber auch nicht mit der an der Chassisplatte befestigten Verzahnung in Eingriff sein, weil sonst unerwünschte Schaltvorgänge stattfinden würden, die die Funktion des Laufwerkes beeinträchtigen. Der Schwenkbereich des Schwenkhebels, in dem das Schwenkrad weder in Eingriff mit der an der Chassisplatte befestigten Verzahnung noch mit den Wickelrädern sein darf, ist toleranzkritisch und engt den Bereich ein, in dem mit hoher Kraft umgeschaltet werden kann.

Es ist Aufgabe der Erfindung, eine Vorrichtung zu schaffen, die es ermöglicht, den Schwenkhebel in einem großen Winkelbereich mit hoher Kraft umzuschalten, ohne daß im Stand-By Betrieb die Gefahr besteht, daß das Schwenkrad des Schwenkhebels unerwünschte Schaltvorgänge bewirkt.

Diese Aufgabe ist erfindungsgemäß dadurch gelöst, daß der Stellhebel eine Verzahnung aufweist, die mit dem an dem Schwenkhebel des schwenkbaren Getriebes angeordneten Schwenkrad in Eingriff bringbar ist, daß ein drehbar gelagerter Ankerhebel vorgesehen ist, dessen Drehbewegung von der Bewegung des Stellhebels gesteuert wird, daß der verschwenkende Schwenkhebel in einem mittleren Bereich des Schwenkbereiches gegen eine Anschlagkante des Ankerhebels drückt, so daß nachfolgend infolge der Abstützung des Schwenkhebels an der Anschlagkante des Ankerhebels Verzahnungskräfte mittels Zwischenrad und Schwenkrad auf die Verzahnung des Stellhebels übertragen werden, so daß dieser gedreht wird.

Befindet sich der Stellhebel mit seiner Verzahnung innerhalb des Schwenkbereiches des Schwenkhebels, so wird in einem Anfangs- und Endbereich des Schwenkbereiches der Schwenkhebel z.B. mittels der von der Reibkupplung übertragenen Reibkraft geschwenkt. Im mittleren Bereich des Schwenkbereiches drückt der verschwenkende Schwenkhebel gegen eine Anschlagkante des Ankerhebels. In diesem mittleren Bereich des Schwenkbereiches ist die Verzahnung des Stellhebels mit der Verzahnung des Schwenkrades in Eingriff. Der Schwenkhebel kann sich nachfolgend an der Anschlagkante des Ankerhebels abstützen, und es können mittels Zwischenrad und Schwenkrad Verzahnungskräfte auf die Verzahnung des Stellhebels übertragen werden. Diese mittels der Verzahnungskräfte auf den Stellhebel übertragbaren Kräfte sind deutlich größer als die mittels der Reibkupplung übertragbaren Reibkräfte. Daher können in dem mittleren Bereich des Schwenkbereiches mittels des Stellhebels auch kraftaufwendige Gerätefunktionen betätigt werden. Dadurch, daß der Stellhebel und damit auch die Verzahnung des Stellhebels gedreht wird, und zwar entgegen der Schwenkrichtung des Schwenkrades, wird der Abstand zwischen der Stellhebelverzahnung und den Wickelrädern im Stand-By-Betrieb erhöht.

Eine vorteilhafte Ausgestaltung der Erfindung ist dadurch gekennzeichnet, daß der Stellhebel an einem an der Chassisplatte gelagerten Trägerelement gelagert ist, an welchem ein Magnetkopf anordbar ist, und daß der Stellhebel mittels Bewegung des Trägerelementes aus dem Schwenkbereich des Schwenkhebels herausbewegbar ist.

Dadurch, daß die zur Erhöhung des zur Verfügung stehenden Schaltmomentes vorhandene Verzahnung am Stellhebel, in die das auf dem Schwenkhebel gelagerte Schwenkrad mit seiner Verzahnung eingreift, in der Stand-By Stellung aus dem Schwenkbereich des Schwenkhebels herausbewegt wird, wird der Schwenkbereich des Schwenkhebels, in dem das Schwenkrad weder mit einem der Wickelräder noch mit der Verzahnung des Stellhebels in Eingriff sein darf, überhaupt nicht mehr durch die Verzahnung des Stellhebels eingeengt, wodurch das Laufwerk toleranzunkritischer wird.

Nach einer vorzugsweisen Ausgestaltung der Erfindung ist die Stellhebelverzahnung an einer Stirnseite des Stellhebels angeordnet ist und die Verschwenkrichtung des Schwenkhebels und die Bewegungsrichtung des Stellhebels verlaufen in dem mittleren Schwenkbereich im wesentlichen parallel zueinander.

Bei einer weiteren vorteilhaften Ausgestaltung der Erfindung ist vorgesehen, daß der Ankerhebel drehbar an einer Chassisplatte gelagert ist.

Die Steuerung der Drehbewegung des Ankerhebels mittels der Bewegung des Stellhebels kann vorzugsweise dadurch realisiert werden, daß der Ankerhebel ein Leitelement aufweist, das in eine Leitöffnung des Stellhebels eingreift oder daß der Stellhebel ein Leitelement aufweist, das in eine Leitöffnung des Ankerhebels eingreift. Eine derartige Konstruktion ist einfach, kostengünstig und zuverlässig zu realisieren.

In weiterer vorteilhafter Ausgestaltung der Erfindung ist vorgesehen, daß die Leitöffnung des Stellhebels als Langloch mit zwei verschieden breiten Bereichen ausgebildet ist, wobei in einem ersten, schmalen Bereich die Breite des Langloches im wesentlichen der Breite des Leitelementes entspricht und in einem zweiten, breiten Bereich die Breite des Langloches größer als die Breite des Leitelementes ist.

Die Ausbildung eines Langloches ermöglicht es, den Stellhebel gegenüber dem Ankerhebel zu verschieben. Befindet sich das Leitelement in dem schmalen Bereich des Langloches, so wird eine Verschwenkbewegung des Stellhebels in eine Verschwenkbewegung des Ankerhebels umgewandelt. Befindet sich das Leitelement in dem breiten Bereich des Langloches, so kann der Stellhebel innerhalb dieses breiten Bereiches verschwenken, ohne auf den Ankerhebel einzuwirken.

Eine weitere vorteilhafte Ausgestaltung der Erfindung ist dadurch gekennzeichnet, daß der Stellhebel einen Umschaltmechanismus bedient, mittels dessen eine erste Druckrolle für eine erste Bandlaufrichtung gegen eine erste Tonwelle und eine zweite Druckrolle für eine zweite Bandlaufrichtung gegen eine zweite Tonwelle drückbar ist.

Vorzugsweise kann eine Umschalteinrichtung gemäß der Erfindung in einem Laufwerk bzw. in einem Magnetbandkassettengerät mit einem Laufwerk eingesetzt werden.

Eine Ausführungsform der Erfindung wird nachfolgend anhand der Zeichnung in den Fig. 1 bis 5 näher erläutert. Es zeigen:
Fig. 1 eine Draufsicht auf Teile eines Reverselaufwerkes eines Magnetbandkassettengerätes mit einer Umschaltvorrichtung für an Druckrollenhebeln gelagerte und gegen Tonwellen drückbare Druckrollen sowie mit einem zwischen zwei Wickelrädern schwenkbaren Getriebe in einer ersten Bandlaufrichtung (Play REV),
Fig. 2 eine Draufsicht auf Teile des Reverselaufwerkes, wobei sich das Laufwerk während des Umschaltens von der ersten Bandlaufrichtung (Play REV) in eine zweite Bandlaufrichtung (Play NOR) in einer ersten Zwischenstellung befindet, in der die Schwenkbewegung eines Schwenkhebels von einem Ankerhebel gebremst wird,
Fig. 3 eine Draufsicht auf Teile des Reverselaufwerkes, wobei sich das Laufwerk während des Umschaltens zwischen der ersten Bandlaufrichtung (Play REV) und der zweiten Bandlaufrichtung (Play NOR) in einer zweiten Zwischenstellung befindet, in der der Ankerhebel den Schwenkhebel gerade freigibt,
Fig. 4 eine Draufsicht auf Teile des Reverselaufwerkes in der zweiten Bandlaufrichtung (Play NOR).
Fig. 5 eine Draufsicht auf Teile des Reverselaufwerkes, wobei sich das Laufwerk in einer ersten Schnellspulstellung (Fast REV) befindet

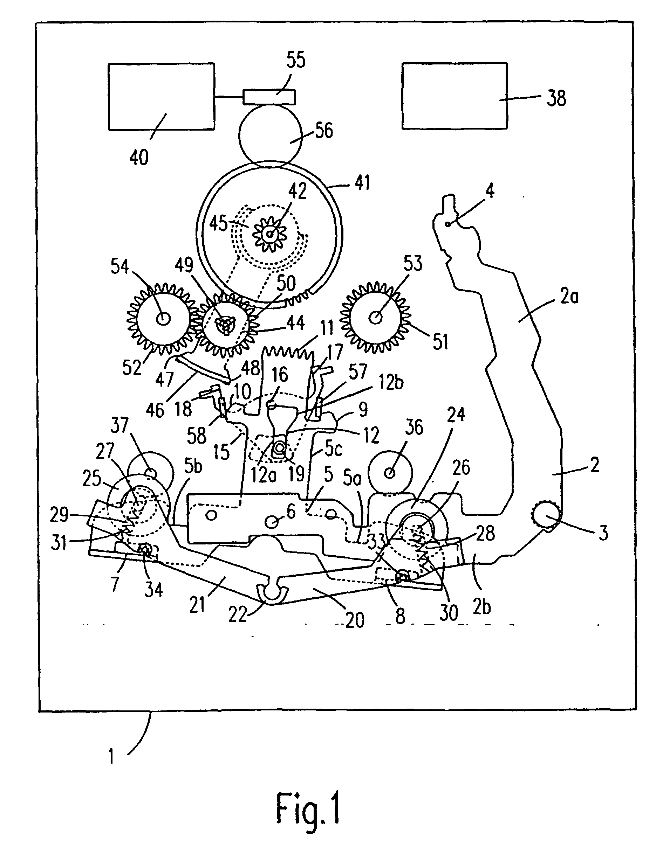

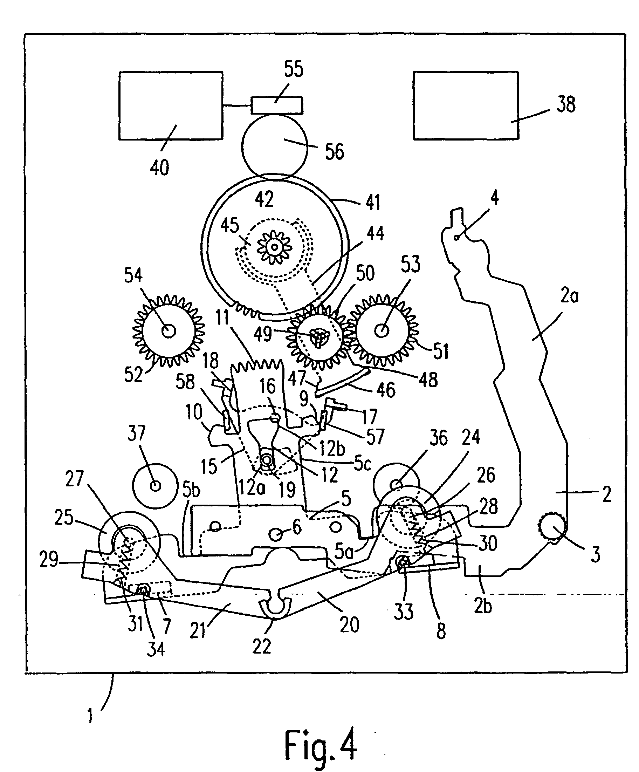

Die Fig. 1, 2, 3, 4 und 5 zeigen in schematischer Darstellung eine Draufsicht auf Teile eines Reverselaufwerkes in verschiedenen Betriebspositionen. In Fig. 1 ist die Betriebsposition für eine erste Bandlaufrichtung (Play REV) dargestellt. Das in Fig. 1 gezeigte erfindungsgemäße Laufwerk weist eine als Gestell wirkende Chassisplatte 1 auf, an der ein Trägerelement 2 um eine Achse 3 drehbar gelagert ist. Das Trägerelement 2 weist einen Schenkel 2a und einen Schenkel 2b auf. An dem Schenkel 2a des Trägerelementes 2 ist ein Führungsstift 4 angeordnet. Dieser Führungsstift 4 greift in eine nicht dargestellte Steuerkontur einer nicht dargestellten Steuerscheibe ein. Diese nicht dargestellte Steuerscheibe übt die notwendigen Kräfte für das Verdrehen des Trägerelementes 2 um die Drehachse 3 auf den Führungsstift 4 aus. An dem Trägerelement 2 ist eine nicht dargestellte Magnetkopfbandführungseinheit angelagert. Durch ein Verdrehen des Trägerelementes 2 um die Drehachse 3 ist es möglich, die nicht dargestellte Magnetkopfbandführungseinheit in Richtung auf ein nicht dargestelltes Magnetband einer Magnetbandkassette hin- und zurückzufahren. An dem Trägerelement 2 ist um eine Drehachse 6 ein Stellhebel 5 drehbar gelagert. Der Stellhebel 5 ist T-förmig ausgebildet und weist zwei Querschenkel 5a und 5b sowie einen Mittelschenkel 5c auf. Die Querschenkel 5a und 5b des Stellhebels 5 weisen jeweils ein Langloch 7 bzw. 8 auf. Der Mittelschenkel 5c des Stellhebels 5 weist an der einen Seite einen Ansatz 9 und gegenüberliegend auf der anderen Seite einen Ansatz 10 auf. Die Stirnseite des Mittelschenkels 5c ist als Stellhebelverzahnung 11 ausgebildet. Der Mittelschenkel 5c des Stellhebels 5 weist als Leitöffnung eine Stellhebelnut 12 auf, die als Längsnut ausgebildet ist und einen schmalen Bereich 12a und einen breiten Bereich 12b aufweist.

An der Chassisplatte 1 ist um eine Drehachse 16 ein Ankerhebel 15 drehbar gelagert. Der Ankerhebel 15 weist als Anschlagkanten zwei Ansätze 17 und 18 sowie als Leitelement einen Ankerhebelzapfen 19 auf, der in die Stellhebelnut 12 des Stellhebels 5 eingreift.

An der Chassisplatte 1 sind ein erster Druckrollenhebel 20 und ein zweiter Druckrollenhebel 21 drehbar um eine gemeinsame Drehachse 22 gelagert. Es ist auch möglich, die Druckrollenhebel 20 und 21 um örtlich voneinander entfernte Drehachsen zu lagern. An dem freien Ende des ersten Druckrollenhebels 20 ist eine erste Druckrolle 24 angelagert, an dem freien Ende des zweiten Druckrollenhebels 21 ist eine zweite Druckrolle 25 gelagert. Die erste Druckrolle 24 weist einen ersten Mittelstift 26 und die zweite Druckrolle 25 einen zweiten Mittelstift 27 auf. Der erste Mittelstift 26 ist in einer Nut 28 des ersten Druckrollenhebels 20 verschiebbar gelagert und mittels einer schematisch dargestellten Feder 30 gegenüber dem ersten Druckrollenhebel 20 verspannt. Der zweite Mittelstift 27 ist in einer Nut 29 des zweiten Druckrollenhebels 21 verschiebbar gelagert und mittels einer Feder 31 gegenüber dem zweiten Druckrollenhebel 21 verspannt. Der erste Druckrollenhebel 20 weist einen Nocken 33 auf, der in das Langloch 8 des Stellhebels 5 eingreift. Der zweite Druckrollenhebel 21 weist einen Nocken 34 auf, der in das Langloch 7 des Stellhebels 5 eingreift.

An der Chassisplatte 1 sind zwei Tonwellen 36 und 37 angelagert, welche mit nicht dargestellten Schwungscheiben verbunden sind. Für den Antrieb der Tonwellen 36 und 37 ist ein Tonwellenmotor 38 vorgesehen, der in zwei Richtungen antreibbar ist. Der Tonwellenmotor 38 treibt die Tonwellen 36 und 37 mittels einer nicht dargestellten Peese an, welche in nicht dargestellter Weise um die nicht dargestellten Schwungscheiben gewickelt ist.

Neben dem Tonwellenmotor 38 ist ein in zwei Richtung antreibbarer Servomotor 40 vorgesehen, der mittels einer Schneckenwelle 55 und eines Untersetzungszahnrades 56 ein an der Chassisplatte 1 angelagertes Zwischenrad 41 um die Drehachse 42 in zwei Richtungen antreiben kann. Um die Drehachse 42 ist neben dem Zwischenrad 41 ein Schwenkhebel 44 drehbar gelagert. Das Zwischenrad 41 und der Schwenkhebel 44 sind über eine Reibkupplung 45 miteinander gekoppelt. Der Schwenkhebel 44 weist eine Stirnseite 46 mit zwei seitlichen Kanten 47 und 48 auf.

Ferner ist an dem Schwenkhebel 44 ein Schwenkhebelzapfen 49 angeordnet, um den ein Schwenkrad 50 drehbar gelagert ist. Das Schwenkrad 50 kann durch ein Verschwenken des Schwenkhebels 44 mit einem ersten Wickelrad 51 und einem zweiten Wickelrad 52 wahlweise in Eingriff gebracht werden. Das erste Wickelrad 51 ist um eine Drehachse 53 und das zweite Wickelrad 52 um eine Drehachse 54 drehbar an der Chassisplatte 1 gelagert. Die Wickelräder 51 und 52 können in nicht dargestellte Wickelöffnungen einer nicht dargestellten Magnetbandkassette eingreifen. An der Chassisplatte 1 sind zwei Chassisanschläge 57 und 58 angeordnet, gegen welche die Ansätze 9 und 10 des Stellhebels 5 drückbar sind.

In der in Fig. 1 dargestellten Betriebsposition (Play REV) treibt der Servomotor 40 mittels der Schneckenwelle 55, des Untersetzungszahnrades 56, des Zwischenrades 41 und des Schwenkrades 50 das zweite Wickelrad 52 an. Gleichzeitig treibt der Tonwellenmotor 38 über die nicht dargestellte Peese die nicht dargestellten Schwungscheiben der Tonwellen 36 und 37 an. Dadurch wird das nicht dargestellte Magnetband von der Tonwelle 37 und der gegen die Tonwelle 37 drückenden Druckrolle 25 in der ersten Bandlaufrichtung (Play REV) transportiert. Bei dem Andrücken der Druckrolle 25 gegen die Tonwelle 37 wird der zweite Mittelstift 27 in der Nut 29 des zweiten Druckrollenhebels 21 verschoben und die Feder 31 gegenüber dem zweiten Druckrollenhebel 21 gespannt. Dadurch übt die zweite Druckrolle 25 unter Abstützung an der Tonwelle 37 mittels der Feder 31, des zweiten Druckrollenbügels 21 und des Nockens 34 des Druckrollenbügels 21, eine Kraft auf den Stellhebel 5 aus, welcher wiederum eine Kraft auf das Trägerelement 2 ausübt. Die erste Druckrolle 24 und der erste Druckrollenbügel 20 üben in der Spielstellung Play REV keine Kraft auf den Stellhebel 5 und damit auch keine Kraft auf das Trägerelement 2 aus.

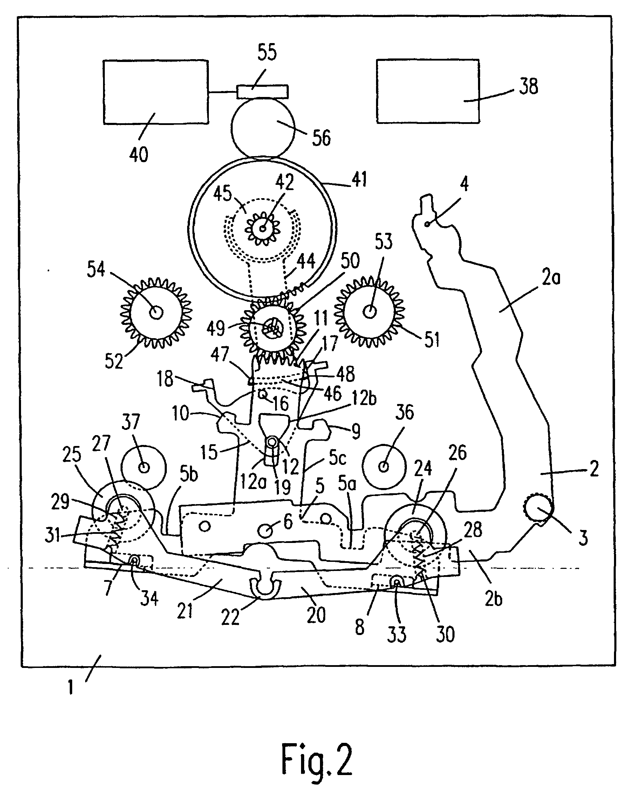

Nachfolgend wird das Umschalten von der ersten Bandlaufrichtung (Play REV) in die entgegengesetzte Bandlaufrichtung (Play NOR) näher erläutert. Ausgehend von der in Fig. 1 dargestellten ersten Bandlaufrichtung (Play REV) wird das Trägerelement durch Einwirkung der nicht dargestellten Steuerscheibe auf den Führungsstift 4 des Trägerelementes 2 im Gegenuhrzeigersinn gedreht, und zwar so weit, daß die Ansätze 9 und 10 des Stellhebels 5 nicht mehr gegen Chassisanschläge 57 und 58 drücken, wodurch die Position des Stellhebels 5 nicht mehr von den Chassisanschlägen 57 und 58 bestimmt wird. Der weitere Umschaltvorgang wird nun von dem Servomotor 40 eingeleitet. Der Servomotor 40 reversiert, d.h. er ändert seine Drehrichtung und treibt über die Schneckenwelle 55 und das Untersetzungszahnrad 56 das Zwischenrad 41 derart an, daß dieses sich im Gegenuhrzeigersinn dreht. Das sich im Gegenuhrzeigersinn drehende Zwischenrad 41 übt mittels der Reibkupplung 45 auf den Schwenkhebel 44 eine Kraft im Gegenuhrzeigersinn aus, infolge derer sich der Schwenkhebel 44 im Gegenuhrzeigersinn auf die Verzahnung 11 des Stellhebels 5 zubewegt. Mit einem weiteren Verschwenken des Schwenkhebels 44 kommt die Verzahnung des Schwenkrades 50 mit der Verzahnung 11 des Stellhebels 5 in Eingriff. Der Schwenkhebel 44 bewegt sich zunächst infolge des Reibmomentes, welches die Reibkupplung 45 aufbringt, weiter im Gegenuhrzeigersinn, bis er mit seiner seitlichen Kante 48 gegen den Ansatz 17 des Ankerhebels 15 stößt. Diese Position ist in Fig. 2 dargestellt.

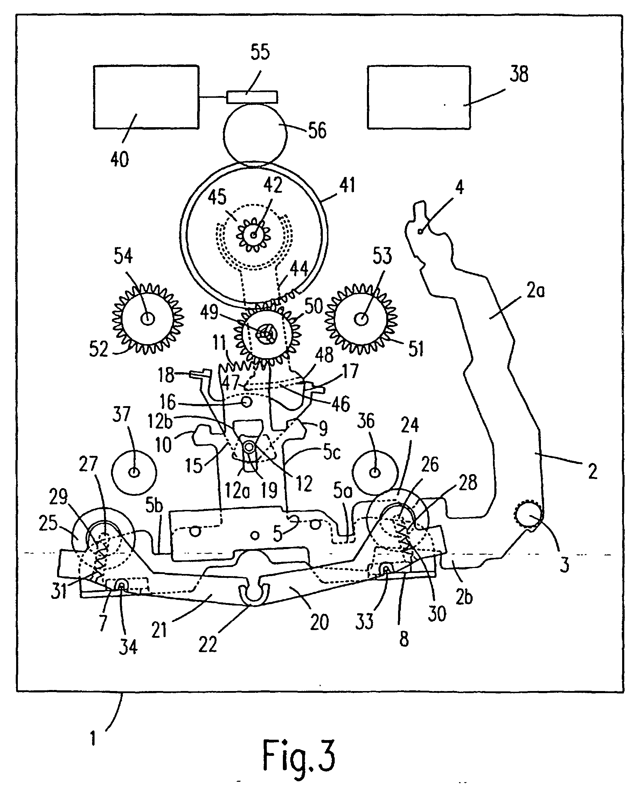

Durch das Anstoßen der seitlichen Kante 48 gegen den Ansatz 17 des Ankerhebels 15 wird die freie Schwenkbewegung des Schwenkhebels 44 infolge des Reibmomentes, welches mittels des Zwischenrades 41 und der Reibkupplung 45 auf den Schwenkhebel 44 ausgeübt wird, gestoppt. Da der Schwenkhebel 44 sich nachfolgend in einem mittleren Schwenkbereich an dem Ankerhebel 15 abstützen kann, können die Drehkräfte des Zwischenrades 41 direkt mittels Verzahnungskräften von der Verzahnung des Zwischenrades 41 auf die Verzahnung des Schwenkrades 50 und von der Verzahnung des Schwenkrades 50 auf die Stellhebelverzahnung 11 des Stellhebels 5 übertragen werden. Der Stellhebel 5 wird somit mittels der Verzahnungskräfte, welche deutlich größer sind als die mittels der Reibkupplung übertragbaren Kräfte, im Gegenuhrzeigersinn verschwenkt. Der verschwenkende Stellhebel 5 wirkt mit seiner Stellhebelnut 12 auf den Ankerhebelzapfen 19 ein, wodurch sich der Ankerhebel 15 um seine Drehachse 16 im Uhrzeigersinn dreht. Infolge der Verzahnungskräfte zwischen dem Schwenkrad 50 und der Verzahnung 11 des Stellhebels 5 folgt der Schwenkhebel 44 mit seiner seitlichen Kante 48 dem Ansatz 17 des Ankerhebels 15 so lange, bis der Ansatz 17 des Ankerhebels 15 die seitliche Kante 48 des Schwenkhebels 44 freigibt. Diese Position von Stellhebel 5, Ankerhebel 15 und Schwenkhebel 44 ist in Fig. 3 dargestellt.

Sobald der Ansatz 17 des Ankerhebels 15 die seitliche Kante 48 des Schwenkhebels 44 freigibt, kann sich der Schwenkhebel 44 nicht mehr an dem Ankerhebel 15 abstützen, und daher kann die Drehkraft des Zwischenrades 41 nicht mehr mittels Verzahnungskräften auf die Verzahnung 11 des Stellhebels 5 übertragen werden. Der Schwenkhebel 44 verschwenkt daher in einem nachfolgenden Endbereich des Verschwenkens nur noch infolge des mittels der Reibkupplung 45 aufgebrachten Reibmomentes. Mit dem weiteren Verschwenken des Schwenkhebels 44 geht die Verzahnung des Schwenkrades 50 außer Eingriff mit der Stellhebelverzahnung 11 des Stellhebels 5, und der Schwenkhebel 44 mit dem Schwenkrad 50 schwenkt infolge des Reibmomentes, welches die Reibkupplung 45 aufbringt, im Gegenuhrzeigersinn in die Verzahnung des Wickelrades 51. Die Verzahnungskräfte zwischen Wickelrad 51, Schwenkrad 50 und Zwischenrad 41 sind selbsteinziehend ausgeführt.

Nachfolgend wird das Trägerelement 2 im Uhrzeigersinn verschwenkt, indem die nicht dargestellte Steuerkontur der nicht dargestellten Steuerscheibe auf den am Ende des Schenkels 2a angeordneten Führungsstift 4 einwirkt. Mit dem Verschwenken des Trägerelementes 2 wird der an dem Trägerelement 2 um die Drehachse 6 drehbar angelagerte Stellhebel 5 in Richtung auf die Wickelräder 53 und 54 bewegt. Dabei drückt der rechte Ansatz 9 des Stellhebels 5 gegen die linke Kante des Chassisanschlages 57 und gleitet an dieser entlang. Ist das Trägerelement 2 bis in die Spielposition für die zweite Bandlaufrichtung (Play NOR) verschwenkt, so nimmt auch der Stellhebel 5 die Betriebsposition Play NOR ein, welche durch die Position des Trägerelementes 2 und durch die Chassisanschläge 57 und 58 bestimmt ist. Mit dem Überführen des Stellhebels 5 von der Stellung Play REV in die Stellung Play NOR sind gleichzeitig die Druckrollenhebel 20 und 21 mittels der in den Langlöchern 7 und 8 des Stellhebels 5 geführten Nocken 33 und 34 der Druckrollenhebel 20 und 21 von der Betriebsposition für die erste Bandlaufrichtung (Play REV) in die Betriebsposition für die zweite Bandlaufrichtung (Play NOR) überführt worden. Dadurch drückt die rechte Druckrolle 24 gegen die rechte Tonwelle 36, und das Magnetband wird in NOR-Richtung transportiert. Bei dem Andrücken der Druckrolle 24 gegen die Tonwelle 36 wird der erste Mittelstift 26 in der Nut 28 des ersten Druckrollenhebels 20 verschoben und die Feder 30 gegenüber dem ersten Druckrollenhebel 20 gespannt. Dadurch übt die erste Druckrolle 24 unter Abstützung an der Tonwelle 36 mittels der Feder 30, des ersten Druckrollenbügels 20 und des Nockens 33 des Druckrollenbügels 20, eine Kraft auf den Stellhebel 5 aus, welcher wiederum eine Kraft auf das Trägerelement 2 ausübt. Die zweite Druckrolle 25 und der zweite Druckrollenbügel 21 üben in der Spielstellung Play NOR keine Kraft auf den Stellhebel 5 und damit auch keine Kraft auf das Trägerelement 2 aus. Somit übt nur die erste Andruckrolle 24, welche zum Transport des Magnetbandes in der Betriebsstellung Play NOR gegen die Tonwelle 36 gedrückt werden muß, unter Abstützung an dieser Tonwelle 36 eine Kraft auf Stellhebel 5 und Trägerelement 2 aus. Die zweite Druckrolle 25, die in der Betriebsstellung Play NOR keine eigentliche Funktion hat, pendelt dagegen "frei" und übt keine Kraft auf Stellhebel 5 und Trägerelement 2 aus.

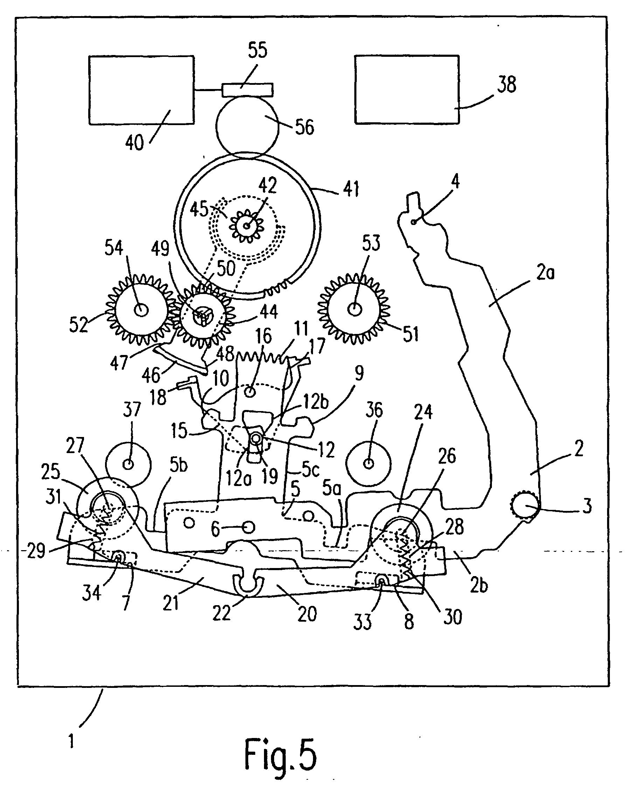

Fig. 5 zeigt eine Draufsicht auf Teile des Reverselaufwerkes in einer ersten Schnellspulstellung (Fast Reverse). Gegenüber der in der Figur 1 dargestellten Stellung ist das Trägerelement 2 um die Achse 3 im Gegenuhrzeigersinn verschwenkt. Das verschwenkende Trägerelement 2 nimmt bei dem Verschwenken den an dem Trägerelement 2 um die Drehachse 6 gelagerten Stellhebel 5 mit. Dieser Stellhebel 5 wirkt mit seinen Langlöchern 7 und 8 auf die Nocken 33 und 34 der Druckrollenhebel 20 und 21 ein. Dadurch wird die Druckrolle 25 von der Tonwelle 37 abgehoben und das nicht dargestellte Magnetband kann mittels der Wickelräder 53 und 54 an den Tonwellen 36 und 37 vorbeigeführt werden, ohne daß die Druckrollen 24 und 25 das nicht dargestellte Magnetband berühren.

Das Trägerelement 2 kann gegenüber der in Fig. 5 dargestellten Stellung weiter im Gegenuhrzeigersinn in eine Bereitschaftsstellung (Stand-By) verschwenkt werden, in der das Magnetband nicht transportiert wird. In dieser Stand By-Stellung ist der Stellhebel 5 aus dem Schwenkbereich des Schwenkhebels 44 herausbewegt. In diesem Stand-By-Betrieb ist das Schwenkrad 50 mit keinem der Wickelräder 53 und 54 in Eingriff. Da der Stellhebel 5 mit seiner Stellhebelverzahnung 11 jedoch völlig aus dem Schwenkbereich des Schwenkhebels 44 herausbewegt worden ist, besteht im Stand-By-Betrieb keine Gefahr, daß das Schwenkrad 50 mit der Stellhebelverzahnung 11 des Stellhebels 5 in Eingriff kommt und so unerwünschte Schaltvorgänge bewirkt.

## Patentansprüche

1. Umschaltvorrichtung für ein Reverselaufwerk für ein Magnetbandkassettengerät mit einem zwischen einem ersten und einem zweiten Wickelrad (51, 52) in einem Schwenkbereich schwenkbaren Getriebe, mittels dessen in einer ersten Betriebsposition der Umschaltvorrichtung für eine erste Bandlaufrichtung das erste Wickelrad (51) und in einer zweiten Betriebsposition der Umschaltvorrichtung für eine zweite Bandlaufrichtung das zweite Wickelrad (52) antreibbar ist, wobei beim Schwenkvorgang zwischen den zwei Betriebspositionen das Getriebe auf einen bewegbar gelagerten Stellhebel (5) einwirkt und wobei ein Schwenkhebel (44) vorgesehen ist, an dem ein Schwenkrad (50) angeordnet ist, und wobei der Schwenkhebel (44) mit einem mit dem Schwenkrad (50) kämmenden Zwischenrad (41), insbesondere mittels einer Reibkupplung (45), gekoppelt ist, **dadurch gekennzeichnet,**
**daß** der Stellhebel (5) eine Verzahnung (11) aufweist, die mit dem an dem Schwenkhebel (44) des schwenkbaren Getriebes angeordneten Schwenkrad (50) in Eingriff bringbar ist, daß ein drehbar gelagerter Ankerhebel (15) vorgesehen ist, dessen Drehbewegung von der Bewegung des Stellhebels (5) gesteuert wird,
**daß** der verschwenkende Schwenkhebel (44) in einem mittleren Bereich des Schwenkbereiches gegen eine Anschlagkante (17, 18) des Ankerhebels (15) drückt, so daß nachfolgend infolge der Abstützung des Schwenkhebels (44) an der Anschlagkante (17, 18) des Ankerhebels (15) Verzahnungskräfte mittels Zwischenrad (41) und Schwenkrad (50) auf die Verzahnung (11) des Stellhebels (5) übertragen werden, so daß dieser gedreht wird.

2. Umschaltvorrichtung nach Anspruch 1, **dadurch gekennzeichnet, daß** der Stellhebel (5) an einem an der Chassisplatte (1) gelagerten Trägerelement (2) gelagert ist, an welchem ein Magnetkopf anordbar ist, und daß der Stellhebel (5) mittels Bewegung des Trägerlementes (2) aus dem Schwenkbereich des Schwenkhebels (44) herausbewegbar ist.

3. Umschaltvorrichtung nach Anspruch 1 oder 2, **dadurch gekennzeichnet, daß** die Stellhebelverzahnung (11) an einer Stirnseite des Stellhebels (5) angeordnet ist und die Verschwenkrichtung des Schwenkhebels (44) und die Bewegungsrichtung des Stellhebels (5) in dem mittleren Schwenkbereich im wesentlichen parallel zueinander verlaufen.

4. Umschaltvorrichtung nach einem der Ansprüche 1 bis 3, **dadurch gekennzeichnet, daß** der Ankerhebel (15) drehbar an einer Chassisplatte (1) gelagert ist.

5. Umschaltvorrichtung nach einem der Ansprüche 1 bis 4, **dadurch gekennzeichnet, daß** der Ankerhebel (15) ein Leitelement (19) aufweist, das in eine Leitöffnung (12) des Stellhebels (5) eingreift oder daß der Stellhebel (5) ein Leitelement aufweist, das in eine Leitöffnung des Ankerhebels (15) eingreift.

6. Umschaltvorrichtung nach Anspruch 5, **dadurch gekennzeichnet, daß** die Leitöffnung (12) des Stellhebels (5) als Langloch (12) mit zwei verschieden breiten Bereichen ausgebildet ist, wobei in einem ersten, schmalen Bereich (12a) die Breite des Langloches (12) im wesentlichen der Breite des Leitelementes (19) entspricht und in einem zweiten, breiten Bereich die Breite (12b) des Langloches (12) größer als die Breite des Leitelementes (19) ist.

7. Umschaltvorrichtung nach einem der Ansprüch 1 bis 6, **dadurch gekennzeichnet, daß** der Stellhebel (5) einen Umschaltmechanismus bedient, mittels dessen eine erste Druckrolle (24) für eine erste Bandlaufrichtung gegen eine erste Tonwelle (36) und eine zweite Druckrolle (25) für eine zweite Bandlaufrichtung gegen eine zweite Tonwelle (39) drückbar ist.

8. Laufwerk mit einer Umschaltvorrichtung nach einem der Ansprüche 1 bis 7.

9. Magnetbandkassettengerät mit einem Laufwerk nach Anspruch 8.

## Claims

1. A switching device in a reverse drive for a magnetic tape cassette apparatus, comprising a drive mechanism which is pivotable in a pivoting range between a first and a second reel-disc wheel (51, 52), by means of which drive mechanism the first reel-disc wheel (51) is drivable in a first operating position of the switching device for a first tape-transport direction and the second reel-disc wheel (52) is drivable in a second operating position of the switching device for a second tape-transport direction, the drive mechanism acting upon a movably supported actuating lever (5) during the pivotal movement between the two operating positions, and a pivotal lever (44) being provided which carries a pivotal wheel (50), and the pivotal lever (44) being coupled to an intermediate wheel (41), particularly by means of a friction coupling (45), which intermediate wheel meshes with the pivotal wheel (50), **characterized in that**
the actuating lever (5) has teeth (11) which are engageable with the pivotal wheel (50) mounted on the pivotal lever (44) of the pivotable drive mechanism, **in that** a pivotably supported armature lever (15) has been provided whose pivotal movement is controlled by the movement of the actuating lever (5), and **in that** the pivoting pivotal lever (44) abuts against a stop edge (17, 18) of the armature lever (15) in the central part of the pivoting range, so that subsequently, owing to the abutment of the pivotal lever (44) against the stop edge (17, 18) of the armature lever (15), meshing forces are transmitted to the teeth (11) of the actuating lever (5) by means of the intermediate wheel (41) and the pivotal wheel (50), as a result of which said actuating lever is pivoted.

2. A switching device as claimed in Claim 1, **characterized in that** the actuating lever (5) is supported on a carrier element (2) which is mounted on a deck plate (1) and on which a magnetic head can be mounted, and **in that** the actuating lever (5) is movable out of the pivoting range of the pivotal lever (44) by movement of the carrier element (2).

3. A switching device as claimed in Claim 1 or 2, **characterized in that** the actuating-lever teeth (11) are provided on an end face of the actuating lever (5), and the direction of movement of the pivotal lever (44) and the direction of movement of the actuating lever (5) are oriented substantially parallel to one another in the central part of the pivoting range.

4. A switching device as claimed in any one of the Claims 1 to 3, **characterized in that** the armature lever (15) is pivotably supported on the deck plate (1).

5. A switching device as claimed in any one of the Claims 1 to 4, **characterized in that** the armature lever (15) comprises a guide element (19) which engages in a guide opening (12) in the actuating lever (5), or the actuating lever (5) has a guide element which engages in a guide opening in the armature lever (15).

6. A switching device as claimed in Claim 5, **characterized in that** the guide opening (12) in the actuating lever (5) is a slot (12) having two parts of different width, the width of the slot (12) in a narrow first part (12a) corresponding substantially to the width of the guide element (19) and the width of the slot (12) in a broad second part (12b) being greater than the width of the guide element (19).

7. A switching device as claimed in any one of the Claims 1 to 6, **characterized in that** the actuating lever (5) actuates a switching mechanism by means of which a first pressure roller (24) for a first tape-transport direction can be applied to a first capstan (36) and a second pressure roller (25) for a second tape-transport direction can be applied to a second capstan (39).

8. A tape deck comprising a switching device as claimed in any one of the Claims 1 to 7.

9. A magnetic tape cassette apparatus comprising a deck as claimed in Claim 8.

## Revendications

1. Dispositif de commutation pour un mécanisme d'entraînement réversible pour un magnétophone à cassette avec une transmission à pivotement entre une première et une deuxième roue de bobinage (51, 52) dans une plage de pivotement, transmission à l'aide de laquelle la première roue de bobinage (51) peut être entraînée dans une première position de fonctionnement du dispositif de commutation pour un premier sens d'avance de la bande et la deuxième roue de bobinage (52) peut être entraînée dans une deuxième position de fonctionnement du dispositif de commutation pour un deuxième sens d'avance de la bande, la transmission agissant sur un levier de réglage (5) logé à déplacement lors de l'opération de pivotement entre les deux positions de fonctionnement et un levier pivotant (44) contre lequel est disposé une roue à pivotement (50) étant prévu et le levier pivotant (44) étant couplé avec une roue intermédiaire entrant en prise avec la roue pivotante (50), en particulier à l'aide d'un accouplement à friction (45), **caractérisé en ce**
**que** le levier de réglage (5) présente une denture (11) qui peut entrer en prise avec la roue à pivotement (50) disposée contre le levier pivotant (44) de la transmission à pivotement, qu'un levier d'ancrage logé à rotation (15) dont le mouvement de rotation est commandé par le mouvement du levier de réglage (5) est prévu, que le levier pivotant (44) en cours de pivotement presse dans une zone centrale de la plage de pivotement contre un bord de butée (17, 18) du levier d'ancrage (15) de telle sorte que des forces d'engrènement soient transmises à l'aide de la roue intermédiaire (41) et de la roue pivotante (50) sur la denture (11) du levier de réglage (5) en raison de l'appui du levier pivotant (44) contre le bord de butée (17, 18) du levier d'ancrage (15) de telle sorte que le levier de réglage (5) tourne.

2. Dispositif de commutation selon la revendication 1, **caractérisé en ce que** le levier de réglage (5) est logé contre un élément porteur (2) logé sur la plaque du châssis (1), élément contre lequel peut être disposée une tête magnétique et que le levier de réglage (5) peut être extrait de la plage de pivotement du levier pivotant (44) par le mouvement de l'élément de support (2).

3. Dispositif de commutation selon l'une des revendications 1 ou 2, **caractérisé en ce que** la denture du levier de réglage (11) est disposée sur une face d'about du levier de réglage (5) et que le sens de pivotement du levier pivotant (44) et le sens d'avance du levier de réglage (5) s'étendent de manière essentiellement parallèle dans la plage centrale de pivotement.

4. Dispositif de commutation selon l'une des revendications 1 à 3, **caractérisé en ce que** le levier d'ancrage (15) est logé à rotation sur une plaque de châssis (1).

5. Dispositif de commutation selon l'une des revendications 1 à 4, **caractérisé en ce que** le levier d'ancrage (15) présente un élément de guidage (19) qui entre en prise dans une ouverture de guidage (12) du levier de réglage (5) et que le levier de réglage (5) présente un élément de guidage qui entre en prise dans une ouverture de guidage du levier d'ancrage (15).

6. Dispositif de commutation selon la revendication 5, **caractérisé en ce que** l'ouverture de guidage (12) du levier de réglage (5) est conçue comme un orifice oblong (12) avec deux zones de largeur différentes, la largeur de l'orifice oblong (12) correspondant essentiellement à la largeur de l'élément de guidage (19) dans une première zone étroite (12a) et la largeur (12b) de l'orifice oblong (12) étant supérieure à la largeur de l'élément de guidage (19) dans une deuxième zone plus large.

7. Dispositif de commutation selon l'une des revendications 1 à 6, **caractérisé en ce que** le levier de réglage (5) actionne un mécanisme de commutation à l'aide duquel un premier galet presseur (24) peut être pressé pour un premier sens d'avance de la bande contre un premier cabestan (36) et un deuxième galet presseur (25) peut être pressé pour un deuxième sens d'avance de la bande contre un deuxième cabestan (39).

8. Mécanisme d'entraînement avec un dispositif de commutation selon l'une des revendications 1 à 7.

9. Magnétophone à cassette avec un mécanisme d'entraînement selon la revendication 8.
